# EUROPEAN PATENT SPECIFICATION

(11) **EP 3 420 479 B1**
(45) Date of publication and mention of the grant of the patent: **21.09.2022**
(21) Application number: 17757168.4
(22) Date of filing: 23.02.2017
(51) Int. Cl.: G06Q 50/10, H04N 21/262

(54) **DIGITAL MEDIA CONTENT COMPARATOR**
KOMPARATOR FÜR DIGITALE MEDIENINHALTE
COMPARATEUR DE CONTENU MULTIMÉDIA NUMÉRIQUE

(30) Priority: 24.02.2016 US 201615051732
(43) Date of publication of application: 02.01.2019
(73) Proprietor: Sazan, David, Paramus, New Jersey 07652 (US)
(72) Inventor: Sazan, David, Paramus, New Jersey 07652 (US)
(74) Representative: Tergau & Walkenhorst Patentanwälte PartGmbB
(86) International application number: PCT/US2017/019019
(87) International publication number: WO 2017/147232

(56) References cited:
- KR-A- 20090 007 849
- US-A1- 2012 088 477
- US-A1- 2012 311 086
- US-A1- 2014 075 583
- US-A1- 2014 282 886
- US-A1- 2015 156 274

## Description

### FIELD

This disclosure relates generally to digital media content management and, more particularly, to a computer-implemented system and method that compares a user's digital media content to a celebrity's digital media content playlist and facilitates the acquisition of missing digital media content by the user.

### BACKGROUND

Society idolizes celebrities and people frequently want to emulate them. As a result, celebrities are often trendsetters, and what they do, where they go, and what they wear can influence consumers' decision making with respect to taste, style and even public opinion.

Many people want to know as much as they can about a particular celebrity and, in particular, are extremely interested in what digital media content (e.g., music, video, books, *etc.)* celebrities consume. Like many consumers, celebrities organize their personal acquired, licensed or rented digital media content into playlists based on personal preferences. For example, a celebrity may create a playlist of different songs by different artists that the celebrity prefers to listen to while relaxing, exercising, dining, driving, *etc.*

While a digital media playlist can be shared with others and some celebrities have posted playlists online, such playlists are static, tend to be artificially populated and may not be reflective of what a particular celebrity is actually listening to. However, once a celebrity's playlist is posted online or otherwise made available to consumers, that celebrity loses the opportunity to monetize the celebrity's playlist because consumers can obtain digital media content in the playlist elsewhere.

What is needed is a way for consumers to access the contents of non-static, "real" celebrity digital media playlists without allowing the consumer to view the playlists.

US 2012/088477 A1 (CASSIDY BRENDON P [US]) 12 April 2012, discloses a system to synchronise two play-lists belonging to two users.

### SUMMARY

The invention is defined by the independent claims. Dependent claims define preferred embodiments.

One aspect of this disclosure provides a system and computer-implemented method for acquiring digital content identified in a celebrity content list without disclosing the list. One or more celebrity content lists are stored in at least one database, each celebrity content list being associated with a particular celebrity and identifying digital content selected by the celebrity for inclusion in list. When executed by at least one processor, program instructions stored in non-transient memory cause the at least one processor to receive a request from a user's computing device for a specific quantity of content associated with a particular celebrity content list. The particular celebrity content list associated with the request is retrieved from the at least one database. A list is received from the user's computing device identifying existing user content user stored on or otherwise accessible by the user's computing device. The existing user content is compared to the particular celebrity content list to identify any missing content absent from the existing user content. The specific quantity of missing content is transmitted to the user's computing device without the user viewing the particular celebrity content list.

The foregoing and following outlines rather generally the features and technical advantages of one or more embodiments of this disclosure in order that the following detailed description may be better understood. Additional features and advantages of this disclosure will be described hereinafter, which may form the subject of the claims of this application.

### BRIEF DESCRIPTION OF THE DRAWINGS

This disclosure is further described in the detailed description that follows, with reference to the drawings, in which:
FIG. 1 is a block diagram of an illustrative computing device that may be utilized to implement the various features and processes described herein;
FIG. 2 illustrates, in simplified form, an exemplary system in which a cloud-based computing environment acts as a content comparator;
FIG. 3 illustrates, in simplified form, an alternative exemplary system in which the cloud-based computing environment acts as a content comparator/exchanger;
FIG. 4 illustrates an example comparison between content in a celebrity playlist and a user's existing content;
FIG. 5 illustrates, in simplified form, the results of the comparison in the example of FIG. 4;
FIG. 6 illustrates, in simplified form, an exemplary process flow; and
FIG. 7 illustrates a representative example of a cloud computing node of a cloud computing environment.

### DETAILED DESCRIPTION

A technical solution has been devised to address the problem of how a celebrity can allow a user to access the contents of the celebrity's digital media playlist without the user being able to view that playlist. The systems and associated computer-implemented methods involve creating a celebrity content listing ("playlist"), importantly, keeping that content listing non-viewable ("blinded") from the user, comparing the user's existing digital media content to the digital media content in the celebrity content listing to identify missing content that the user does not have access to ("missing content"), and, optionally for a fee paid by the user, allowing the user to purchase, rent or legally download missing content to the user's computing device.

The technical solution may be implemented as a cloud-based solution that obtains one or more celebrity content listings (playlists) stored on one or more computing devices associated with one or more celebrities. Such celebrity content listings may include (but are not limited to) music listened to, videos watched, TV channels/shows watched, web sites visited, blogs read, social media content followed, pictures viewed, places visited, items purchased, and applications (apps) used, which are just a few of the many examples of listings of content that can typically be acquired from a celebrity's computing device.

Representative examples of digital media content include (but are not limited to) owned, licensed, and rented digital music files, music albums, playlists, compilations, movies, television shows, eBooks, audiobooks, newspapers, magazines, web browsing bookmarks, user preference data, audio podcasts, video podcasts, software applications (apps), documents, *etc.*

Users who want to have matching digital media content to a celebrity of interest submit a request (preferably with an associated payment of a fee) over a network using the user's computing device, which request is received by the cloud-based computing environment. The cloud-based computing environment compares the user's existing digital media content to the digital media content on the celebrity's playlist to identify what content is missing from the user's existing content ("missing content"), and provides some or all of the missing content (or a pathway for accessing the content, *e.g.,* a link to a YouTube^{®} video) to the user's device, either through the cloud-based service acting as an intermediary, or directly from one or more content providers to the user's one or more computing devices.

Although this disclosure is described in connection with a cloud computing environment, it is understood that implementation of the teachings recited herein are not limited to a cloud computing environment. Rather, embodiments of the present disclosure are capable of being implemented in conjunction with any other type of computing environment now known or later developed.

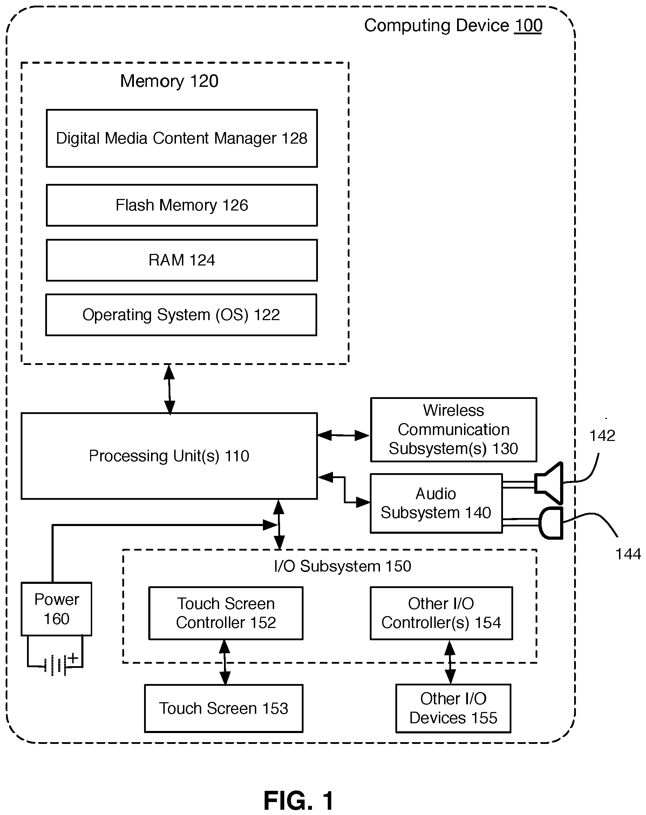

FIG. 1 is a block diagram of an illustrative computing device 100 for use in connection with various embodiments of this disclosure. Examples of computing devices 100 include (but are not limited to) mobile phones, smartphones, digital music players, tablets, digital video players, laptop computers, personal computers, personal digital assistants (PDAs), servers, virtual machines, online cloud storage locations, and other computing products configured to store or playback digital media content.

As shown, the computing device 100 includes one or more processing units 110 coupled to system memory 120, and various sensors and subsystems including (but not limited to) wireless communication subsystem(s) 130, audio subsystem 140, I/O subsystem 150, power subsystem 160, *etc.*

The processing unit(s) 110 is coupled to system memory 120, which stores various software components or applications to be executed by processing unit(s) 110. Preferably, memory 120 stores an operating system (OS) 122, which includes various procedures, sets of instructions, software components and/or drivers for controlling and managing general system tasks *(e.g.,* memory management, storage device control, power management, *etc.)* and facilitates communication between various hardware and software components. System memory 120 also preferably includes RAM 124 and non-volatile flash memory 126, a combination of volatile / non-volatile memory, and/or any other type of memory.

System memory 120 also includes a digital media content manager 128, which is an application *(e.g.,* iTunes^{®}, Windows^{®} Media Player, Real Rhapsody^{®}, *etc.)* for creating, sharing, search, organizing and accessing playlists of digital media content stored on (or otherwise accessible to) the device 100.

System memory 120 may also include communication instructions to facilitate communicating with one or more additional devices; graphical user interface (GUI) instructions to facilitate GUI processing; image processing instructions to facilitate image-related processing and functions; input processing instructions to facilitate input-related (e.g., touch input) processes and functions; audio processing instructions to facilitate audio-related processes and functions; camera instructions to facilitate camera-related processes and functions; and biometric verification instructions to facilitate the verification of biometric data. It is understood that the communication instructions described above are merely exemplary and the system memory 120 may also include additional instructions. For example, memory 120 for a computing device 110 may include phone instructions to facilitate phone-related processes and functions. It is also understood that the above-mentioned instructions need not be implemented as separate software programs or modules.

Wireless communication subsystem 130 facilitates communication functions over a network. For example, wireless communication subsystem 130 may include one or more transmitters and receivers (not shown), which are implemented to operate over a network, which may be a wide area network (WAN) such as the Internet, the Public Switched Telephone Network (PSTN), a local area network (LAN), an intranet, an extranet, a cellular network, any wired or wireless network, or any combination of the above.

Audio subsystem 140 is coupled to speaker(s) 142 to output audio and to microphone 144 to facilitate voice-enabled functions, such as voice recognition, digital recording, *etc.*

I/O subsystem 150 facilitates the transfer between I/O peripheral devices, such as (but not limited to) a touch screen 153, and the data bus of the processing unit(s) 110. I/O subsystem 150 includes a touch screen controller 152 and other I/O controller(s) 154 to facilitate the transfer between I/O peripheral devices 153, 155 and the data bus of processing unit(s) 100.

The computing device 100 also includes one or more power source(s) 160 for powering the various hardware components of the computing device. Power source 160 may include a power management system, one or more power sources, a recharging system, a power failure detection circuit, a power converter or inverter, a power status indicator, and any other components typically associated with the generation, management and distribution of power in computing devices.

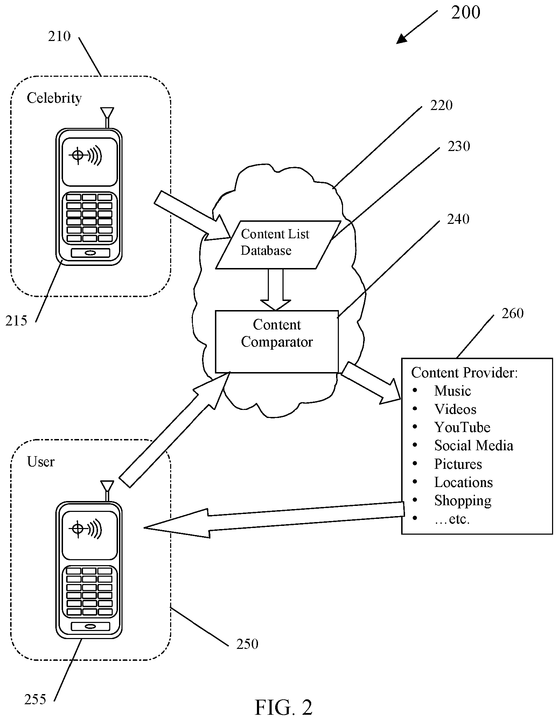

FIG. 2 illustrates, in simplified form, an exemplary system 200 in which the cloud based service 220 acts as a content comparator 240. One or more celebrities 210 utilize one or more computing device(s) 215 to interact wirelessly over a network with a computer programmed cloud-based service 220, which obtains, from the celebrity's computing device 215, a celebrity content listing that is stored in one or more content list databases 230.

In addition to the content list database(s) 230, the cloud-based service 220 also includes one or more computer programmed content comparators 240. The content comparator(s) 240 is responsible for receiving a request from a computing device 255 of a user 250 for content related to a specific celebrity 210, accessing information about the user's existing content stored on (or otherwise accessible by) the user's one or more computing device(s) 255, comparing the user's existing content to the celebrity content list stored in the content list database(s) 230, and determining what content, if any, is missing ("missing content") from the user's existing content.

Once the missing content has been determined (and the user has preferably paid for it), the cloud-based service 220 works cooperatively with one or more content providers 260 to provide the missing content to the user's computing device(s) 255.

The computing devices 215, 255 illustrated in FIG. 2 may be implemented using the illustrative computing device 100 of FIG. 1 or any other known computing device configured to store or playback digital media content.

With respect to the cloud-based service 220 obtaining the celebrity content listing from the celebrity's computing device(s) 215, this can be performed by either the celebrity's computing device(s) 215 pushing the celebrity content listing to the cloud-based service 220 or the celebrity content listing being pulled from the celebrity's computing device(s) 215. Pushing can be accomplished in a conventional manner and typically would employ an app that either runs in the foreground or background of the celebrity's computing device(s) 215. The app would be configured to determine the celebrity content listing from information stored on (or otherwise accessible to) the celebrity's computing device(s) 215 and to send the information to the cloud-based service 220. Pulling can similarly be accomplished in a conventional manner and may employ an app running in the foreground or background of the celebrity's computing device(s) 215 that the cloud-based service 220 interacts with, or the cloud-based service 220 may acquire the celebrity content listing by directly accessing information stored on (or otherwise accessible to) the celebrity's computing device(s) 215, without the use of an app, such as when the celebrity's computing device(s) 215 is plugged into a docking station.

Whether pulling or pushing is utilized, the celebrity content listing is preferably periodically updated, which can similarly be through either pulling or pushing, but need not be performed in the same manner as the celebrity content listing was originally obtained. Updates can either be performed in real time *(e.g.,* if the celebrity content listing is associated with musical content listened to, then every time a song is listened to by the celebrity 210 that content listing could be automatically updated), based on the passage of time (*e*.*g*., hourly, nightly, weekly, monthly, *etc.),* based on an event *(e.g.,* new musical content is acquired by the celebrity 210), and/or initiated by the celebrity 210 *(e.g.,* the celebrity pressed an update button within an app running on the celebrity's computing device 215).

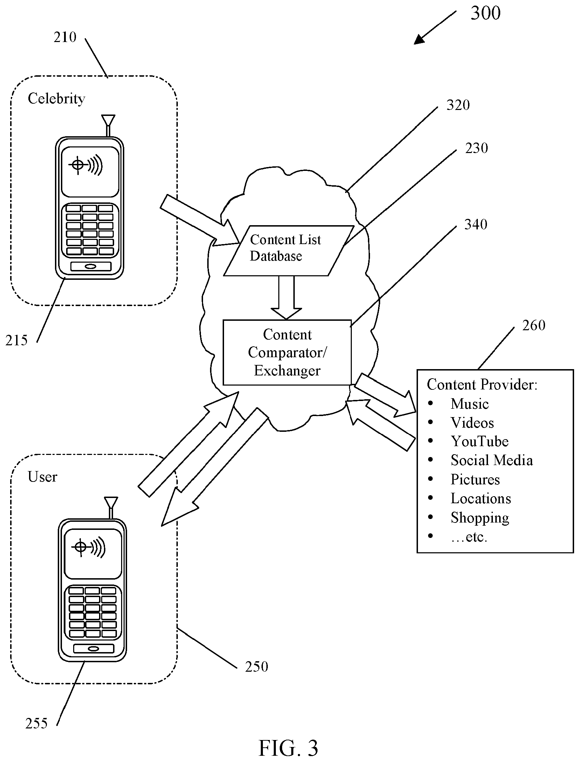

While FIG. 2 illustrates missing content being provided directly from the content provider(s) 260 to the user's computing device(s) 255, it is understood that the missing content could alternatively be provided with a cloud-based service acting as an intermediary, which is illustrated in FIG. 3. FIG. 3 illustrates, in simplified form, an exemplary system 300 in which the cloud-based service 320 acts as a content comparator/exchanger 340.

The representative systems 200, 300 disclosed in FIGS. 2 and 3 are similar in structure and operation, except that in FIG. 3 the content is first received by the content comparator/exchanger 340 from the content provider 260 prior to being provided to the user's computing device(s) 255.

While the content comparator/exchanger 340 is shown as a single component in FIG. 3, it is understood that the content comparator/exchanger could alternatively be divided into separate components, where one component handles the comparing and the other component handles the exchanging.

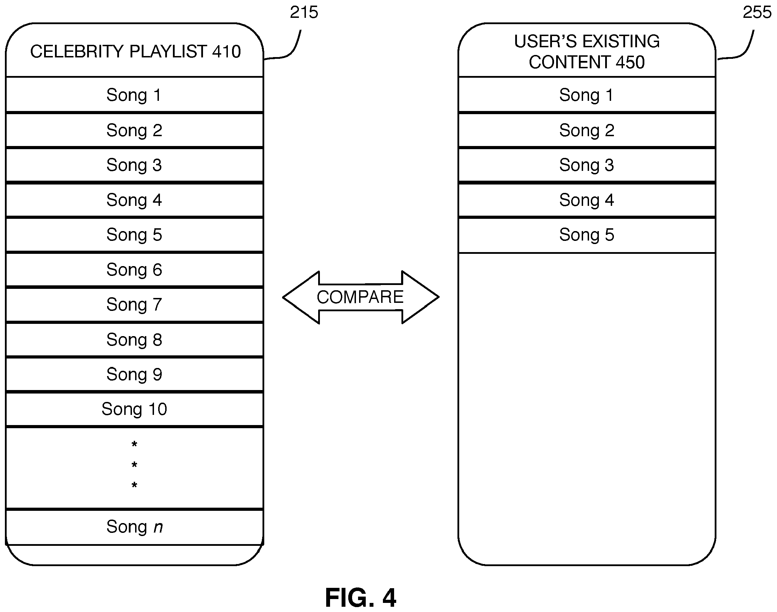

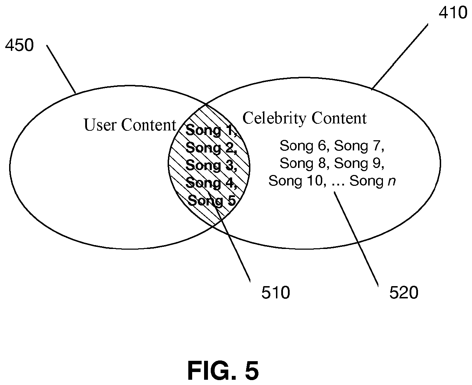

FIGS. 4 and 5 illustrate, in simplified form, an example in which the comparator 240, 340 identifies missing content from a user's computing device 255 upon receipt of a celebrity content request from the user 250. In this example, a celebrity content listing 410 created by a celebrity 210 lists digital media content in the form of a playlist. In this example, the celebrity playlist 410 includes Song 1, Song 2, Song 3, Song 4, Song 5, Song 6, Song 7, Song 8, Song 9, Song 10, ... Song n). The comparator 240, 340 compares the celebrity playlist 410 to the user's existing content 450 stored on (or otherwise accessible by) computing device(s) 255 associated with the user 250. In this example, the user's existing content includes Song 1, Song 2, Song 3, Song 4 and Song 5.

Referring to FIG. 5, based on comparison of the celebrity playlist 410 to the user's existing content 450, the comparator 240, 340 identifies missing content 520, which represents the portion of the celebrity playlist 410 that the is not contained within the user's existing content 450. In this example, the area of overlap 510 represents the digital media content *(i.e.,* Song 1, Song 2, Song 3, Song 4 and Song 5) identified in the celebrity playlist 410 that is part of the user's existing content 450. Similarly, in this example, the comparator 240, 340 would identify the missing content as Song 6, Song 7, Song 8, Song 9, Song 10, ... Song *n.*

By only providing missing content to the user, the full contents of the celebrity's content list 410 are not provided to the user. While it is conceivable for a user to start without any user content 100 and ultimately discover the total celebrity content 410 by purchasing all of the missing content 510, this would require the user to purchase all of the celebrity content 410, at perhaps considerable expense to the user and a financial gain to the celebrity. Additionally, by periodically updating the celebrity content 410, then, in order for the user 250 to obtain a complete and accurate list of the celebrity content 410, the user would have to each and every time start without any user content 100 in order to obtain the complete updated celebrity content list. The reason being that, while a second purchase might provide any "new" missing content, the user would not be privy to, or have knowledge of, any content that was no longer a part of the celebrity content 410 because the deleted content would still be a part of the user's content acquired during the initial purchase. Furthermore, while it is advantageous to employ both only providing missing content and periodically updating the content together, both strategies can also be deployed separately to aid a celebrity in maintaining control over disclosure of the celebrity's content listings.

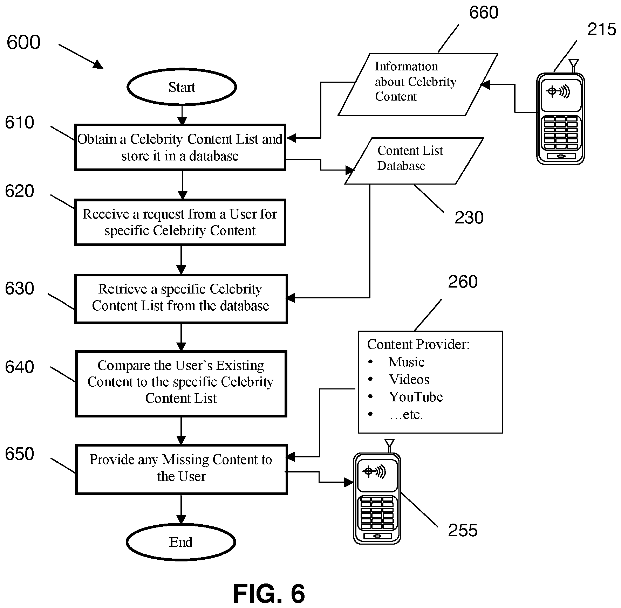

Having described exemplary systems above, exemplary methods will now be described. To this end, FIG. 6 illustrates, in simplified form, an exemplary process flow 600, which includes the following steps using one or more computer programmed processors. In Step 610, a celebrity content list is obtained and stored in database 230. As previously described, obtaining a celebrity content list and storing it in database 230 may involve either pushing or pulling information about celebrity content 660 stored in one or more of the celebrity's computing devices 215, which may be an actual device in the possession of the celebrity 210 or a server based account (*e*.*g*., iTunes^{®}) that is associated with the celebrity 210. Once obtained, the celebrity content list is stored in one or more content list databases 230.

In Step 620, a request is received over a network from the computing device 255 of a user 250 for specific celebrity content. By way of example only, the request from the user 250 may be related to a particular celebrity (e.g., Taylor Swift, Tom Hanks, Tom Brady, President Obama, *etc.),* category/group of celebrities *(e.g.,* heavy metal guitarists, members of the band Kiss^{®}, *etc.),* a type of content *(e.g.,* music, videos, social media, *etc.),* a sub-categorization of content *(e.g.,* Jazz songs within the celebrity's content of music), frequency of access by the celebrity, most recent access by the celebrity, related to the user himself *(e.g.,* only music where there is a matching genre between the user and the celebrity or that is age appropriate for the user), or have a quantity associated with specificity (*e*.*g*., all missing, a specific quantity of missing, a percentage missing, a quantity missing that has a cost of acquisition by the user related to a specific dollar amount, *etc.).* Additionally, receipt of a request for specific celebrity content may be accompanied by an associated payment by the user, in order for the missing digital media content (missing content) to be provided to the user's device 255.

In Step 630, responsive to the request received from the user 250, a specific celebrity content list is retrieved from database(s) 230. In Step 640, the user's existing content is compared to the specific celebrity content list retrieved from database 230. This comparison, performed by the content comparator 240, 340, may be performed either before or after the user 250 has made the specific request for content. If the comparison is performed before the request is made, then such information may be supplied to the user's computing device 255 for display to the user 250 ahead of time *(e.g.,* Elton John's music playlist includes 12 songs that are not in the user's playlist related to show tunes). Alternatively, the user 250 can make the request without knowing the quantity of missing content, and preferably commit an associated payment, and then receive a refund (inclusive of a partial order processing) if the user paid for more requested content than is available as missing content. The latter approach is advantageous because it provides more control over the celebrity content listing because less information is publicly disclosed.

In Step 650, missing content is provided to the user's computing device 255 via one or more networks. As previously discussed in connection with FIGS. 2 and 3, missing content may be provided to the user 250 by either downloading the missing content to the user's computing device(s) 255 directly from the content provider 260 (FIG. 2) or indirectly via the content comparator/exchanger 340 (FIG. 3).

Additionally, when the quantity of missing content exceeds the quantity of requested content, the missing content may be provided to the user (Step 650) based upon predetermined criteria, which may include (but is not limited to) one of more of the following criteria: random selection, frequency of access by the celebrity, most recent access by the celebrity, and/or secondary categorization (*e*.*g*., based upon properties of the of the existing content of the user such as, for example, a high concentration of Beatles^{®} songs).

The exemplary systems and methods discussed above are equally applicable to any type of celebrity content including (but not limited to) music listened to, videos watched, TV channels/shows watched, web sites visited, blogs read, social media content followed, pictures viewed, places visited, items purchased, and apps used, which are just a few of the many examples of listings of content that can typically be acquired from celebrity computing device(s) 100, 215.

As stated above, although not limited to cloud computing environments, some embodiments of this disclosure are described as being implemented in a cloud computing environment. A cloud computing environment is service oriented with a focus on statelessness, low coupling, modularity, and semantic interoperability. At the heart of cloud computing is an infrastructure comprising a network of interconnected nodes.

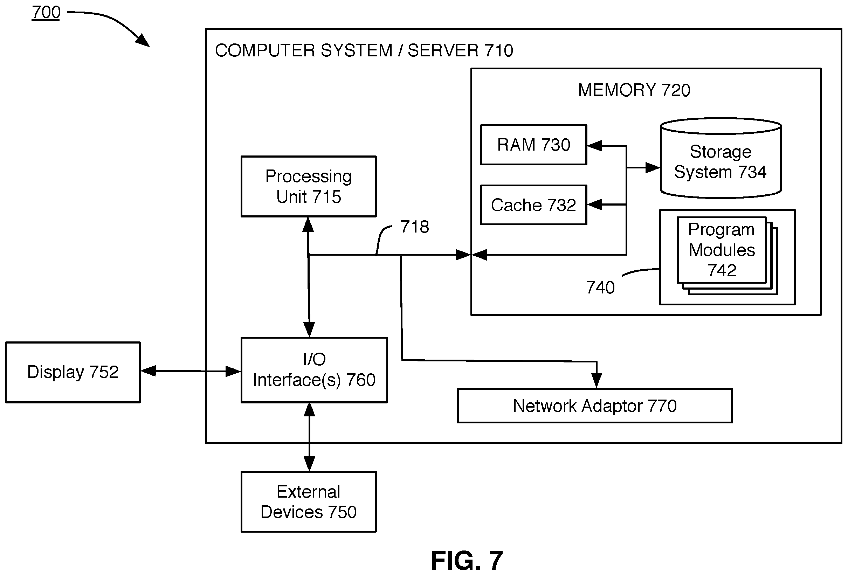

Referring to FIG. 7, a schematic of an example of a cloud computing node is shown. Cloud computing node 700 is only one example of a suitable cloud computing node and is not intended to suggest any limitation as to the scope of use or functionality of embodiments of the invention described herein. Regardless, cloud computing node 700 is capable of being implemented and/or performing any of the functionality set forth hereinabove.

In cloud computing node 700, there is a computer system/server 710, which is operational with numerous other general purpose or special purpose computing system environments or configurations. Examples of well-known computing systems, environments, and/or configurations that may be suitable for use with computer system/server 710 include, but are not limited to, personal computer systems, server computer systems, thin clients, thick clients, hand-held or laptop devices, multiprocessor systems, microprocessor-based systems, set top boxes, programmable consumer electronics, network PCs, minicomputer systems, mainframe computer systems, and distributed cloud computing environments that include any of the above systems or devices, and the like.

Computer system/server 710 may be described in the general context of computer system- executable instructions, such as program modules, being executed by a computer system. Generally, program modules may include routines, programs, objects, components, logic, data structures, and so on that perform particular tasks or implement particular abstract data types. Computer system/server 710 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 7, computer system/server 710 in cloud computing node 700 is shown in the form of a general-purpose computing device. The components of computer system/server 710 may include, but are not limited to, one or more processors or processing units 715, a system memory 720, and a bus 718 that couples various system components including system memory 720 to processing unit(s) 715.

Bus 718 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus.

Computer system/server 710 typically includes a variety of computer system readable media. Such media may be any available media that is accessible by computer system/server 710, and it includes both volatile and non-volatile media, removable and non-removable media.

System memory 720 can include computer system readable media in the form of volatile memory, such as random access memory (RAM) 730 and/or cache memory 732. Computer system/server 710 may further include other removable/non-removable, volatile/non-volatile computer system storage media. By way of example only, storage system 734 can be provided for reading from and writing to a non- removable, non-volatile magnetic media (not shown and typically called a "hard drive"). Although not shown, a magnetic disk drive for reading from and writing to a removable, non-volatile magnetic disk *(e.g.,* a "floppy disk"), and an optical disk drive for reading from or writing to a removable, non-volatile optical disk such as a CD-ROM, DVD-ROM or other optical media can be provided. In such instances, each can be connected to bus 718 by one or more data media interfaces. As will be further depicted and described below, memory 720 may include at least one program product having a set *(e.g.,* at least one) of program modules that are configured to carry out the functions of embodiments of the invention.

Program/utility 740, having a set (at least one) of program modules 742, may be stored in memory 720 by way of example, and not limitation, as well as an operating system, one or more application programs, other program modules, and program data. Each of the operating system, one or more application programs, other program modules, and program data or some combination thereof, may include an implementation of a networking environment. Program modules 742 generally carry out the functions and/or methodologies of embodiments of the invention as described herein.

Computer system/server 710 may also communicate with one or more external devices 750 such as a keyboard, a pointing device, a display 752, *etc.;* one or more devices that enable a user to interact with computer system/server 710; and/or any devices (*e*.*g*., network card, modem, *etc.)* that enable computer system/server 710 to communicate with one or more other computing devices. Such communication can occur via Input/Output (I/O) interfaces 760. Still yet, computer system/server 710 can communicate with one or more networks such as a local area network (LAN), a general wide area network (WAN), and/or a public network (*e*.*g*., the Internet) via network adapter 770. As depicted, network adapter 770 communicates with the other components of computer system/server 710 via bus 718. It should be understood that although not shown, other hardware and/or software components could be used in conjunction with computer system/server 710. Examples, include, but are not limited to: microcode, device drivers, redundant processing units, external disk drive arrays, RAID systems, tape drives, and data archival storage systems, *etc.*

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media *(e.g.,* light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A system for providing digital content identified in a celebrity content list without disclosing the list to an end user, comprising:
a first mobile computing device associated with a particular celebrity, the first mobile computing device having a celebrity content list stored therein, wherein when the particular celebrity uses the first mobile computing device to listen to or view specific digital content, the first mobile computing device will, in response to the particular celebrity viewing or listening to the specific digital content, automatically update the celebrity content list to add the viewed or listened to digital content;
at least one database storing a copy of the celebrity content list, such that the first mobile computing device wirelessly transmits to the at least one database notification of the automatic update and the copy of the celebrity content list is automatically updated in the at least one database in response to a change in the celebrity content list after receiving the notification;
a content comparator computing device comprising at least one processor and non-transient memory that stores program instructions which, when executed by the at least one processor, cause the at least one processor to:
receive a request wirelessly transmitted from a second mobile computing device for a specific quantity of content to be provided from the celebrity content list;
retrieve from the at least one database the copy of the celebrity content list;
receive from the second mobile computing device a user content list identifying existing content stored on, or otherwise accessible by, the second mobile computing device;
identify a first portion of content from the celebrity content list that is present in the user content list;
identify a second portion of content from the celebrity content list that is not included in the user content list; and
cause up to the specific quantity of content to be transmitted to the second mobile computing device only from the second portion and without transmitting the celebrity content list to the second mobile computing device.

2. The system of Claim 1, wherein the program instructions are further configured to cause the at least one processor to transmit to the second mobile computing device summary information related to the up to the specific quantity of content transmitted to the second mobile computing device.

3. The system of Claim 1 or Claim 2, wherein the copy of the celebrity content list is updated in at least one of: real time, upon the passage of a predetermined increment of time, or upon an action performed on the first mobile computing device by the particular celebrity.

4. The system of any of Claims 1 through 3, wherein the program instructions are further configured to, when the specific quantity of content requested is less than the second portion of content, cause the at least one processor to select which content of the second portion of content to transmit to the second mobile computing device based at least in part upon one or more of the following: random selection, frequency of access by the celebrity, recency of access by the particular celebrity, or properties of the content in the user content list.

5. A computer-implemented method for providing digital content identified in a celebrity content list without disclosing the list to an end user, comprising:
storing, on a first mobile computing device used by a particular celebrity to listen to or view specific digital content, a celebrity content list;
storing, using at least one processor, a copy of the celebrity content list in at least one database;
in response to the particular celebrity listening to or viewing the specific digital content, automatically updating the celebrity content list to add the specific digital content;
wirelessly transmitting, from the first mobile computing device to the database, and in response to the celebrity content list being automatically updated, notification of the automatic update,
responsive to receiving the notification, updating the copy of the celebrity content list in the at least one database such that the copy of the celebrity content list is an accurate copy of the celebrity content list stored by the first mobile computing device;
receiving, using the at least one processor, a request wirelessly transmitted from a second mobile computing device for a specific quantity of content to be provided from the celebrity content list;
retrieving, using the at least one processor, the copy of the celebrity content list associated with the request from the at least one database;
receiving, using the at least one processor and from the second mobile computing device, a user content list identifying existing content stored on or otherwise accessible by the second mobile computing device;
identifying, using the at least one processor, a first portion of content from the celebrity content list that is present in the user content list;
identifying, using the at least one processor, a second portion of content from the celebrity content list that is not present in the user content list; and
causing, using the at least one processor, up to the specific quantity of content to be transmitted to the second mobile computing device only from the second portion and without transmitting the celebrity content list to the second mobile computing device.

6. The computer-implemented method of Claim 5, further comprising updating, using at least one processor, the copy of the celebrity content list in the at least one database in at least one of: real time, upon the passage of a predetermined increment of time, or upon an action performed on the first mobile computing device by the particular celebrity.

7. The computer-implemented method of Claim 5 or 6, further comprising, when the specific quantity of content requested is less than the second portion of content, causing the at least one processor to select which content of the second portion of content to transmit to the second mobile computing device based at least in part upon one or more of the following: random selection, frequency of access by the celebrity, recency of access by the particular celebrity, or properties of the content in the user content list.

## Patentansprüche

1. System zum Bereitstellen eines digitalen Inhalts, der in einer Prominenteninhaltsliste identifiziert ist, ohne die Liste für einen Endbenutzer offenzulegen, das Folgendes umfasst:
eine erste mobile Datenverarbeitungsvorrichtung, die mit einem/einer bestimmten Prominenten verknüpft ist, wobei auf der ersten mobilen Datenverarbeitungsvorrichtung eine Prominenteninhaltsliste gespeichert ist, wobei, wenn der/die bestimmte Prominente die erste mobile Datenverarbeitungsvorrichtung verwendet, um sich einen spezifischen digitalen Inhalt anzuhören oder anzusehen, die erste mobile Datenverarbeitungsvorrichtung in Reaktion darauf, dass sich der/die bestimmte Prominente den spezifischen digitalen Inhalt ansieht oder anhört, die Prominenteninhaltsliste automatisch aktualisiert, um den angesehenen oder angehörten digitalen Inhalt hinzuzufügen;
mindestens eine Datenbank, in der eine Kopie der Prominenteninhaltsliste gespeichert ist, derart, dass die erste mobile Datenverarbeitungsvorrichtung eine Benachrichtigung zur automatischen Aktualisierung drahtlos zu der mindestens einen Datenbank überträgt und die Kopie der Prominenteninhaltsliste nach Erhalten der Benachrichtigung in Reaktion auf eine Änderung in der Prominenteninhaltsliste automatisch in der mindestens einen Datenbank aktualisiert wird;
eine Inhaltskomparatordatenverarbeitungsvorrichtung, die mindestens einen Prozessor und einen nichttransienten Speicher umfasst, in dem Programmanweisungen gespeichert sind, die, wenn sie von dem mindestens einen Prozessor ausgeführt werden, den mindestens einen Prozessor zu Folgendem veranlassen:
Empfangen einer Anforderung einer spezifischen aus der Prominenteninhaltsliste bereitzustellenden Inhaltsmenge, die drahtlos von einer zweiten mobilen Datenverarbeitungsvorrichtung übertragen wird;
Abrufen der Kopie der Prominenteninhaltsliste von der mindestens einen Datenbank;
Empfangen einer Benutzerinhaltsliste, die einen bestehenden Inhalt identifiziert, der in der zweiten mobilen Datenverarbeitungsvorrichtung gespeichert oder auf andere Weise für dieselbe zugreifbar ist, von der zweiten mobilen Datenverarbeitungsvorrichtung;
Identifizieren eines ersten Inhaltsabschnitts in der Prominenteninhaltsliste, der in der Benutzerinhaltsliste vorhanden ist;
Identifizieren eines zweiten Inhaltsabschnitts in der Prominenteninhaltsliste, der nicht in der Benutzerinhaltsliste beinhaltet ist; und
Veranlassen, dass ein Inhalt nur aus dem zweiten Abschnitt bis zu der spezifischen Menge zur zweiten mobilen Datenverarbeitungsvorrichtung übertragen wird, ohne dass die Prominenteninhaltsliste zur zweiten mobilen Datenverarbeitungsvorrichtung übertragen wird.

2. System nach Anspruch 1, wobei die Programmanweisungen ferner dazu ausgelegt sind, den mindestens einen Prozessor zu veranlassen, zusammenfassende Informationen, die den Inhalt bis zur spezifischen Menge betreffen, der zur zweiten mobilen Datenverarbeitungsvorrichtung übertragen wird, zur zweiten mobilen Datenverarbeitungsvorrichtung zu übertragen.

3. System nach Anspruch 1 oder Anspruch 2, wobei die Kopie der Prominenteninhaltsliste in mindestens einem von Folgendem aktualisiert wird: Echtzeit, nach Ablauf eines vorbestimmten Zeitinkrements oder nach einer Aktion, die von dem/der bestimmten Prominenten an der ersten mobilen Datenverarbeitungsvorrichtung durchgeführt wird.

4. System nach einem der Ansprüche 1 bis 3, wobei die Programmanweisungen, wenn die angeforderte spezifische Inhaltsmenge kleiner ist als der zweite Inhaltsabschnitt, ferner dazu ausgelegt sind, den mindestens einen Prozessor zu veranlassen, mindestens teilweise auf Basis von einem oder mehrerem von Folgendem: Zufallsauswahl, Häufigkeit des Zugriffs durch den Prominenten bzw. die Prominente, letzter Zugriff durch den Prominenten bzw. die Prominente oder Eigenschaften des Inhalts in der Benutzerinhaltsliste auszuwählen, welcher Inhalt des zweiten Inhaltsabschnitts zur zweiten mobilen Datenverarbeitungsvorrichtung zu übertragen ist.

5. Computerimplementiertes Verfahren zum Bereitstellen eines digitalen Inhalts, der in einer Prominenteninhaltsliste identifiziert ist, ohne die Liste für einen Endbenutzer offenzulegen, das Folgendes umfasst:
Speichern einer Prominenteninhaltsliste auf einer ersten mobilen Datenverarbeitungsvorrichtung, die von einem/einer Prominenten verwendet wird, um sich einen spezifischen digitalen Inhalt anzuhören oder anzusehen;
Speichern einer Kopie der Prominenteninhaltsliste unter Verwendung von mindestens einem Prozessor in mindestens einer Datenbank;
automatisches Aktualisieren der Prominenteninhaltsliste, um den spezifischen digitalen Inhalt hinzuzufügen, in Reaktion darauf, dass sich der/die bestimmte Prominente den spezifischen digitalen Inhalt anhört oder ansieht;
drahtloses Übertragen einer Benachrichtigung zur automatischen Aktualisierung von der ersten mobilen Datenverarbeitungsvorrichtung zur Datenbank in Reaktion darauf, dass die Prominenteninhaltsliste automatisch aktualisiert wird,
Aktualisieren der Kopie der Prominenteninhaltsliste in der mindestens einen Datenbank in Reaktion auf das Empfangen der Benachrichtigung, derart, dass die Kopie der Prominenteninhaltsliste eine genaue Kopie der Prominenteninhaltsliste ist, die von der ersten mobilen Datenverarbeitungsvorrichtung gespeichert wird;
Empfangen einer Anforderung einer spezifischen aus der Prominenteninhaltsliste bereitzustellenden Inhaltsmenge, die drahtlos von einer zweiten mobilen Datenverarbeitungsvorrichtung übertragen wird, unter Verwendung des mindestens einen Prozessors;
Abrufen der Kopie der Prominenteninhaltsliste, die mit der Anforderung verknüpft ist, unter Verwendung des mindestens einen Prozessors von der mindestens einen Datenbank;
Empfangen einer Benutzerinhaltsliste, die einen bestehenden Inhalt identifiziert, der in der zweiten mobilen Datenverarbeitungsvorrichtung gespeichert oder auf andere Weise für dieselbe zugreifbar ist, unter Verwendung des mindestens einen Prozessors von der zweiten mobilen Datenverarbeitungsvorrichtung;
Identifizieren eines ersten Inhaltsabschnitts in der Prominenteninhaltsliste, der in der Benutzerinhaltsliste vorhanden ist, unter Verwendung des mindestens einen Prozessors;
Identifizieren eines zweiten Inhaltsabschnitts in der Prominenteninhaltsliste, der nicht in der Benutzerinhaltsliste vorhanden ist, unter Verwendung des mindestens einen Prozessors; und
Veranlassen unter Verwendung des mindestens einen Prozessors, dass ein Inhalt nur aus dem zweiten Abschnitt bis zu der spezifischen Menge zur zweiten mobilen Datenverarbeitungsvorrichtung übertragen wird, ohne dass die Prominenteninhaltsliste zur zweiten mobilen Datenverarbeitungsvorrichtung übertragen wird.

6. Computerimplementiertes Verfahren nach Anspruch 5, das ferner das Aktualisieren der Kopie der Prominenteninhaltsliste in der mindestens einen Datenbank unter Verwendung von mindestens einem Prozessor in mindestens einem von Folgendem umfasst: Echtzeit, nach Ablauf eines vorbestimmten Zeitinkrements oder nach einer Aktion, die von dem/der bestimmten Prominenten an der ersten mobilen Datenverarbeitungsvorrichtung durchgeführt wird.

7. Computerimplementiertes Verfahren nach Anspruch 5 oder 6, das, wenn die angeforderte spezifische Inhaltsmenge kleiner ist als der zweite Inhaltsabschnitt, ferner das Veranlassen des mindestens einen Prozessors, mindestens teilweise auf Basis von einem oder mehrerem von Folgendem: Zufallsauswahl, Häufigkeit des Zugriffs durch den Prominenten bzw. die Prominente, letzter Zugriff durch den Prominenten bzw. die Prominente oder Eigenschaften des Inhalts in der Benutzerinhaltsliste auszuwählen, welcher Inhalt des zweiten Inhaltsabschnitts zur zweiten mobilen Datenverarbeitungsvorrichtung zu übertragen ist, umfasst.

## Revendications

1. Système pour fournir des contenus numériques identifiés dans une liste de contenus de célébrité sans divulguer la liste à un utilisateur final, comprenant :
un premier dispositif informatique mobile associé à une célébrité particulière, le premier dispositif informatique mobile comportant une liste de contenus de célébrité stockée à l'intérieur de celui-ci, dans lequel, lorsque la célébrité particulière utilise le premier dispositif informatique mobile pour écouter ou regarder des contenus numériques spécifiques, le premier dispositif informatique mobile réalise, en réponse au fait que la célébrité particulière regarde ou écoute les contenus numériques spécifiques, la mise à jour automatique de la liste de contenus de célébrité pour ajouter les contenus numériques regardés ou écoutés ;
au moins une base de données stockant une copie de la liste de contenus de célébrité, de sorte que le premier dispositif informatique mobile transmette sans fil, à l'au moins une base de données, une notification de la mise à jour automatique et la copie de la liste de contenus de célébrité est automatiquement mise à jour dans l'au moins une base de données en réponse à un changement de la liste de contenus de célébrité après la réception de la notification ;
un dispositif informatique de comparaison de contenus comprenant au moins un processeur et une mémoire non transitoire qui stocke des instructions de programme qui, lorsqu'elles sont exécutées par l'au moins un processeur, amènent l'au moins un processeur à :
recevoir une demande transmise sans fil depuis un deuxième dispositif informatique mobile pour une quantité spécifique de contenus à fournir depuis la liste de contenus de célébrité ;
récupérer, depuis l'au moins une base de données, la copie de la liste de contenus de célébrité ;
recevoir, depuis le deuxième dispositif informatique mobile, une liste de contenus d'utilisateur identifiant des contenus existants stockés sur, ou autrement accessibles par, le deuxième dispositif informatique mobile ;
identifier une première partie de contenus depuis la liste de contenus de célébrité qui est présente dans la liste de contenus d'utilisateur ;
identifier une deuxième partie de contenus depuis la liste de contenus de célébrité qui n'est pas incluse dans la liste de contenus d'utilisateur ; et
amener jusqu'à la quantité spécifique de contenus à être transmise au deuxième dispositif informatique mobile uniquement depuis la deuxième partie et sans transmettre la liste de contenus de célébrité au deuxième dispositif informatique mobile.

2. Système selon la revendication 1, dans lequel les instructions de programme sont en outre configurées pour amener l'au moins un processeur à transmettre, au deuxième dispositif informatique mobile, des informations récapitulatives relatives à jusqu'à la quantité spécifique de contenus transmise au deuxième dispositif informatique mobile.

3. Système selon la revendication 1 ou 2, dans lequel la copie de la liste de contenus de célébrité est mise à jour selon au moins l'un parmi : en temps réel, lors de l'écoulement d'un incrément prédéterminé de temps, ou lors d'une action réalisée sur le premier dispositif informatique mobile par la célébrité particulière.

4. Système selon l'une quelconque des revendications 1 à 3, dans lequel les instructions de programme sont en outre configurées pour, lorsque la quantité spécifique de contenus demandée est inférieure à la deuxième partie de contenus, amener l'au moins un processeur à sélectionner quels contenus de la deuxième partie de contenus doivent être transmis au deuxième dispositif informatique mobile sur la base au moins partiellement d'une ou plusieurs parmi : une sélection aléatoire, une fréquence d'accès par la célébrité, une récence d'accès par la célébrité particulière, ou des propriétés des contenus dans la liste de contenus d'utilisateur.

5. Procédé mis en œuvre par ordinateur pour fournir des contenus numériques identifiés dans une liste de contenus de célébrité sans divulguer la liste à un utilisateur final, comprenant :
le stockage, sur un premier dispositif informatique mobile utilisé par une célébrité particulière pour écouter ou regarder des contenus numériques spécifiques, d'une liste de contenus de célébrité ;
le stockage, en utilisant au moins un processeur, d'une copie de la liste de contenus de célébrité dans au moins une base de données ;
en réponse au fait que la célébrité particulière écoute ou regarde les contenus numériques spécifiques, la mise à jour automatique de la liste de contenus de célébrité pour ajouter les contenus numériques spécifiques ;
la transmission sans fil, depuis le premier dispositif informatique mobile à la base de données, et en réponse à la mise à jour automatique de la liste de contenus de célébrité, d'une notification de la mise à jour automatique,
en réponse à la réception de la notification, la mise à jour de la copie de la liste de contenus de célébrité dans l'au moins une base de données de sorte que la copie de la liste de contenus de célébrité soit une copie exacte de la liste de contenus de célébrité stockée par le premier dispositif informatique mobile ;
la réception, en utilisant l'au moins un processeur, d'une demande transmise sans fil depuis un deuxième dispositif informatique mobile pour une quantité spécifique de contenus à fournir depuis la liste de contenus de célébrité ;
la récupération, en utilisant l'au moins processeur, de la copie de la liste de contenus de célébrité associée à la demande depuis l'au moins une base de données ;
la réception, en utilisant l'au moins un processeur et depuis le deuxième dispositif informatique mobile, d'une liste de contenus d'utilisateur identifiant des contenus existants stockés sur, ou autrement accessibles par, le deuxième dispositif informatique mobile ;
l'identification, en utilisant l'au moins un processeur, d'une première partie de contenus depuis la liste de contenus de célébrité qui est présente dans la liste de contenus d'utilisateur ;
l'identification, en utilisant l'au moins un processeur, d'une deuxième partie de contenus depuis la liste de contenus de célébrité qui n'est pas incluse dans la liste de contenus d'utilisateur ; et
le fait d'amener, en utilisant l'au moins un processeur, jusqu'à la quantité spécifique de contenus à être transmise au deuxième dispositif informatique mobile uniquement depuis la deuxième partie et sans transmettre la liste de contenus de célébrité au deuxième dispositif informatique mobile.

6. Procédé mis en œuvre par ordinateur selon la revendication 5, comprenant en outre la mise à jour, en utilisant l'au moins un processeur, de la copie de la liste de contenus de célébrité dans l'au moins une base de données selon au moins l'un parmi : en temps réel, lors de l'écoulement d'un incrément prédéterminé de temps, ou lors d'une action réalisée sur le premier dispositif informatique mobile par la célébrité particulière.

7. Procédé mis en œuvre par ordinateur selon la revendication 5 ou 6, comprenant en outre, lorsque la quantité spécifique de contenus demandée est inférieure à la deuxième partie de contenus, le fait d'amener l'au moins un processeur à sélectionner quels contenus de la deuxième partie de contenus doivent être transmis au deuxième dispositif informatique mobile sur la base au moins partiellement d'une ou plusieurs parmi : une sélection aléatoire, une fréquence d'accès par la célébrité, une récence d'accès par la célébrité particulière, ou des propriétés des contenus dans la liste de contenus d'utilisateur.
